# EUROPEAN PATENT APPLICATION

(11) **EP 2 387 224 A1**
(43) Date of publication of application: **16.11.2011**
(21) Application number: 11425133.3
(22) Date of filing: 12.05.2011
(51) Int. Cl.: H04N 1/40, H04N 1/028, G06K 9/20

(54) **Method for digitally scanning images with dynamic light modulation during the scan**

(30) Priority: 13.05.2010 IT RM20100240
(71) Applicant: Colagrande, Silvia, 00163 Roma (IT); Colagrande, Lorenzo, 00163 Roma (IT); Colagrande, Massimo, 00163 Roma (IT)
(72) Inventor: Colagrande, Silvia, 00163 Roma (IT); Colagrande, Lorenzo, 00163 Roma (IT); Colagrande, Massimo, 00163 Roma (IT)
(74) Representative: Cardelli, Guido

(57) **Abstract**

A method for digitally scanning images with dynamic light modulation during the scan allows optimisation of the light hitting different portions of an object to be digitised through automatic variations of the light intensity of light sources during the scan. The method comprises determining, before the scanning phase, different light emission profiles, suitable for an optimal reflection of the light on different portions of the object to be digitised, and during the scanning phase modulating the light intensity of the light sources on different portions of the object to be digitised according to said light emission profiles so that an optimisation of an image is obtained.

## Description

### Field of the invention

The present invention relates to a method for digitally scanning images with dynamic light modulation during the scan. The method is embodied to image scanners based on one or more linear or multi-linear sensors in which the lighting is concentrated on the portion of the object to be digitised that is visible to the image sensor and, therefore, concentrated on a region substantially linear of scanning surface of the scanner corresponding to the acquisition line of the image sensor.

### State of art

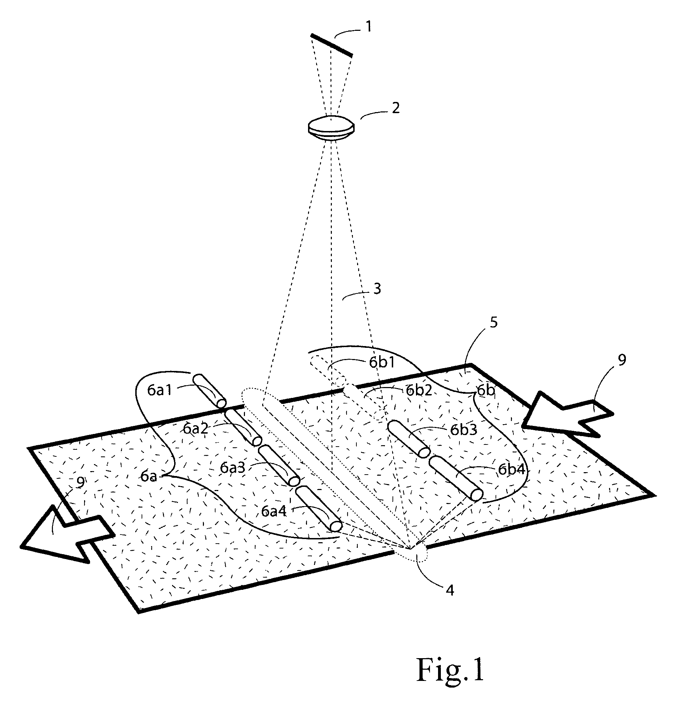

In the figure 1 a known image scanner is exemplified, in an axonometric view, in which some elements in the scanner are shown, i.e. an image sensor 1, an optical system 2, an optical axis 3 , a scanning area 4, and an object to be digitised 5. Two light sources 6a, 6b are each constituted, in the example, by four light bodies 6a1, 6a2, 6a3, 6a4, 6b1, 6b2, 6b3, 6b4. With reference to figure 1, the digital image is synthesised line by line during the scanning phase by moving along the direction of the arrow 9 one or more of the elements among the image sensor 1, the elements 2 and 3 in the optical path of the image, the object to be digitised 5, so that a different portion of the object to be digitised 5 is located in the scanning area 4 for each line sampling of the image sensor 1 and, therefore, is visible to the image sensor 1. The scanning area 4 is the active portion of a scanning plane which corresponds to the very line or lines of acquisition of the image sensor 1. The scanning plane is the plane on which the object to be digitised 5 must lay during the acquisition process in order to obtain an optimal reproduction in terms of magnification, focus and also lightening. Therefore, the scanning plane ideally corresponds to the very object to be digitised 5.

In the image scanners, the specific nature and arrangement of the light sources and, in particular, the number, the position, the orientation of the light bodies with respect to the scanning area, the light emission intensity and the possible use of intermediate elements as diffusers and/or lenses and/or reflectors, determine a particular set of angles and intensities of the light rays that hit the scanning area, and therefore constitute a particular configuration of the lighting system. In some professional scanners the possibility to change, the configuration of the lighting system, before starting the scan, is provided to an user. However, in the known scanners, during the line by line image acquisition process, the configuration of the lighting system remains constant or varies a limited number of times, according to some pre-set patterns, when a determined position of the lighting system with respect to the object to be digitised is reached and anyway without any possibility of making changes of the light other than those described in the pre-set patterns.

For example the patent application US 2009/0290200 discloses a scanning device in which a limited number of light intensity variations are pre-established in order to optimise the acquisition of books and in which the variations are driven directly during the scanning phase by several sensors aimed at the object to be digitised. Furthermore, as the scanning device according to US 2009/0290200 is applicable to only two light sources, such light intensity variations provide only a limited ability to balance the light intensity and the reflections on two sides of the object to be digitised.

The patent application US 2008/0029687 discloses a method for digitally scanning images in which light intensity variations of the light sources within the acquisition cycle of a single image line are provided but no light change is provided between one line and the next one in the image. Therefore the light intensity is always constant through the whole scanning phase and it is also constant in intensity and angle on all the different portions of the object to be digitised

However, the known scanners are characterised by a scanning method that generally corresponds to the following one. First the user places the object to be digitised in correspondence with the scanning plane. In a light setting phase, which is provided only in the most advanced scanners, the user selects or sets the desired configuration of the lighting system also depending on the specific object to be digitised. After the light setting phase, the activation phase of the scanning process takes place in which the light sources are activated and the scanner elements are moved in order to be positioned in correspondence of the beginning of the active scanning plane. After the activation phase, the very scanning phase takes place that includes the acquisition process exemplified in figure 1, and therefore, through the relative movement along the arrow 9 among the image sensor 1, the light sources 6a and 6b and the object to be digitised 5. After the scanning phase, also a closing phase takes place including the following operations: shutdown of the lighting system (when required and if appropriate), end of the movement, processing and saving of the image just scanned. Finally, in known scanners the light configuration remains constant during the whole scanning phase, or the changes in the light configuration during the scanning phase are extremely limited and are applicable only to the digitisation of some kinds of books. This constitutes a limit as it would be desirable to obtain a light optimisation also for different kinds of originals. It would also be desirable to obtain a more flexible and continuous control of the light changes in order to optimise the light reflections also on discrete portions of the same object to be digitised.

### Summary of the invention

An object of the present invention is a scanning method for achieving a lot of possible light configurations on different portions of the object to be digitised, and therefore an optimisation of the corresponding scanned image.

This object is obtained by introducing some changes in the light setting phase and in the scanning phase. In particular, during the light setting phase, the creation of different light emission profiles corresponding to different light sources is introduced. These light emission profiles describe the changes in light intensity that the corresponding light sources or light bodies have to accomplish during the scanning phase. During the scanning phase, the previously determined light emission profiles are used in order to automatically adjust and vary the light intensity of the corresponding light sources. More in detail the light emission profiles are generated during the light setting phase automatically by a software, and on the base of pieces of information that depend on the type and characteristics of the object to be digitised and also depend on the specific result that the user wishes to obtain.

The preferred software implementation, in order to calculate and generate the different light emission profiles corresponding to the different light sources, consists of creating a set of mathematical functions in the form y = f (x) where y is to the light intensity of the corresponding light source at a given position x of the object to be digitised while the internal parameters of the different functions are determined by the characteristics of the object to be digitised and by preferences selected by the user. The method according to the invention is particularly useful when combined with what is disclosed in the Italian patent application No. RM2010A000006 filed on 12/01/2010 by the same applicants who allows to obtain instantaneous variations in the light angle by dimming the light intensity of different light sources.

The present invention will be better understood by the following description, with connection to the accompanying drawings.

### Brief description of figures

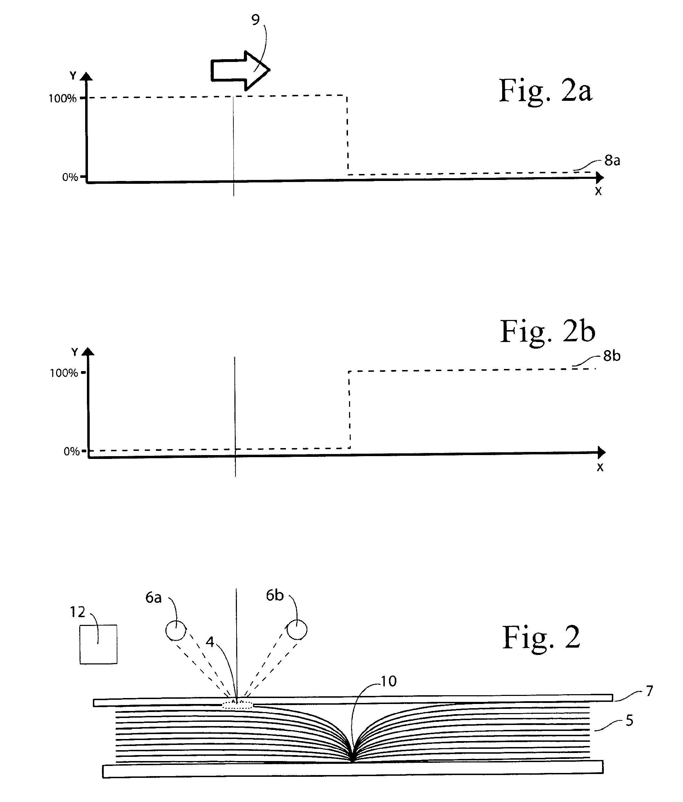

Figures 2, 2a, 2b show a first embodiment of a method for digitally scanning images according to the present invention, figure 2 being a schematic side view of an object to be digitised and figures 2a, 2b being the related diagrams of the light intensity of the light sources (axis y) depending on the scan position or time (axis x), in which during the scanning of a book the light intensity of the two light sources is varied by switching them on and off in correspondence of the middle of the book.

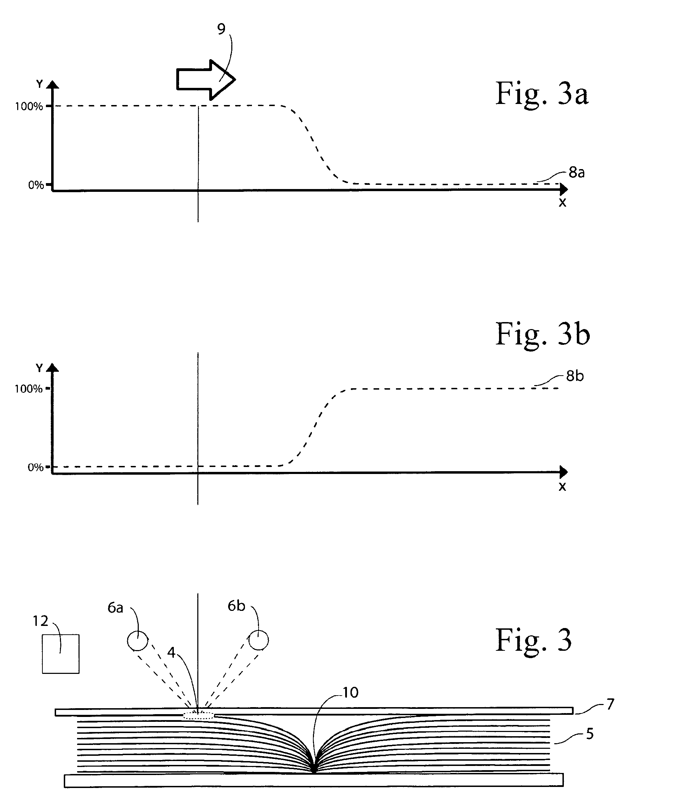

Figures 3, 3a, 3b, similar to figures 2, 2a, 2b, show a second embodiment of the method according to the present invention in which, during the scanning of a book, the light intensity of the two light sources is varied through a gradual modulation of the two light sources in correspondence of the middle of the book.

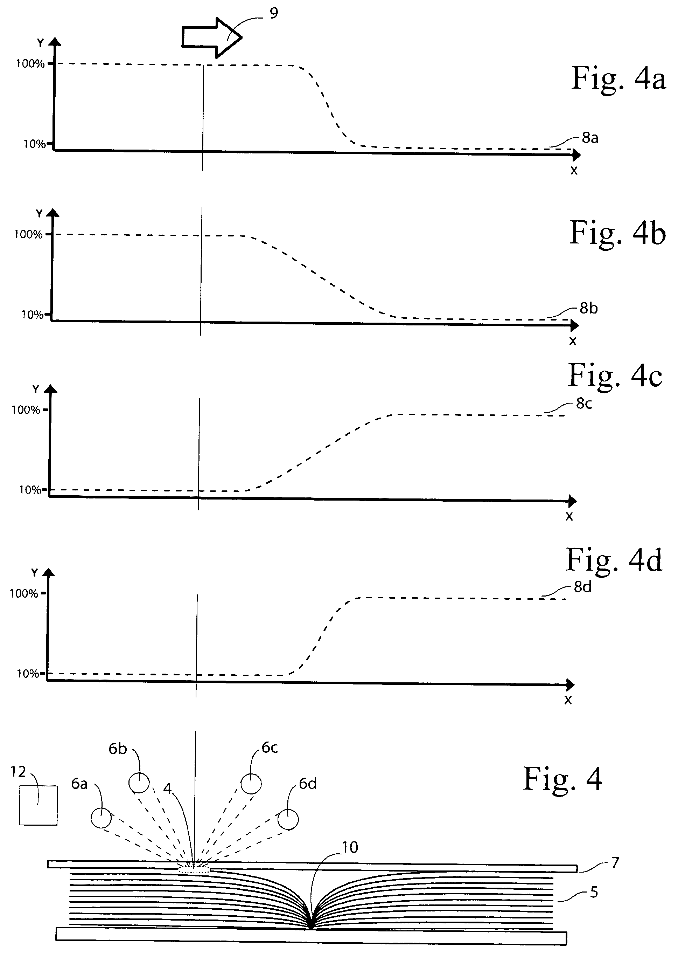

Figures 4, 4a, 4b, 4c, 4d, similar to preceding figures, show a third embodiment of the method according to the present invention in which, during the scanning of a book, the light intensity of four light sources is varied through a gradual modulation in order to obtain also a variation of the intervals of the angles of the light hitting the curvature of the pages near the middle of the book.

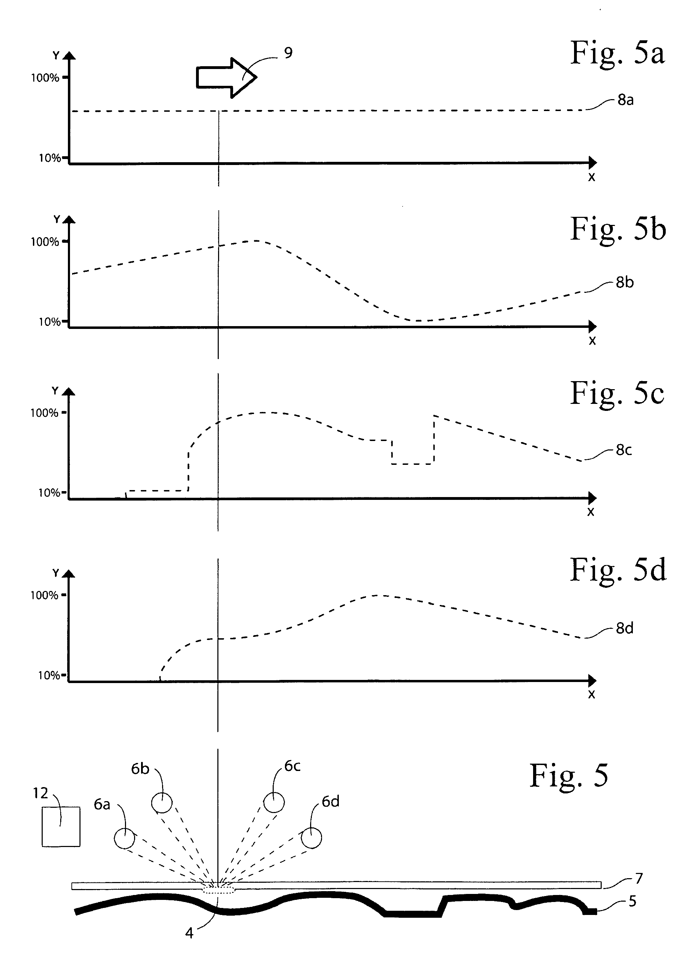

Figures 5, 5a, 5b, 5c, 5d, similar to preceding figures, show a fourth embodiment of the method according to the present invention in which, during the scanning of an object with complex characteristics, the light intensity of four light sources is varied according to a corresponding complex function.

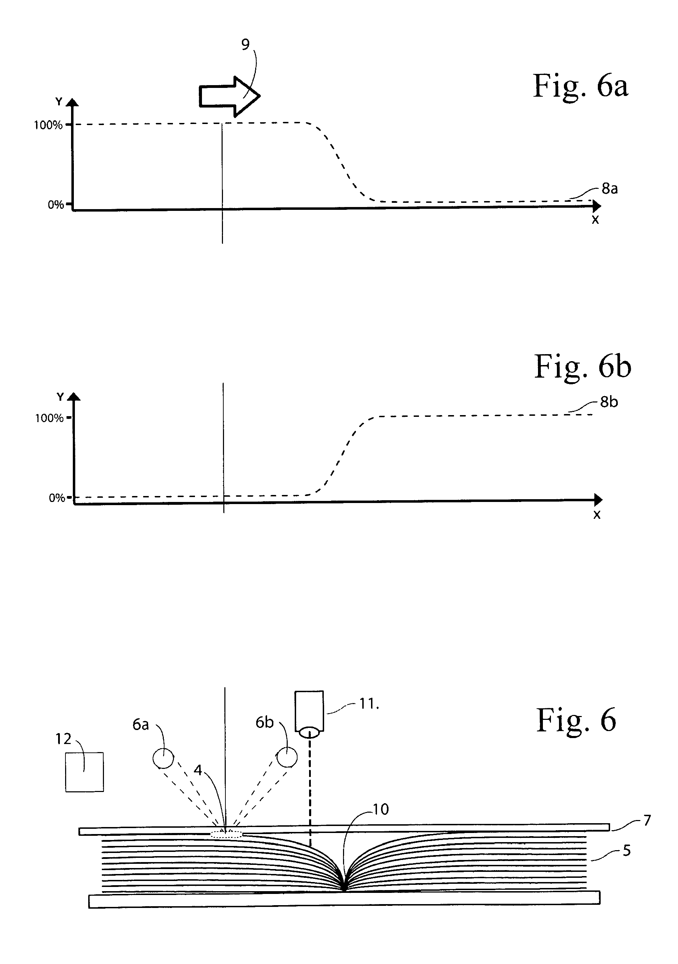

Figures 6, 6a, 6b, similar to preceding figures, show a fifth embodiment of the method according to the present invention in which light emission profiles are varied during the scanning phase according to pieces of information provided by a camera 11 aimed at the object to be digitised and positioned so as to precede the image sensor in the acquisition process.

### Detailed description of the invention

The various embodiments of the method according to the invention, which are described below and exemplified in the figures 2, 3, 4, 5 e 6, represent only a particular application of the method. For clarity sake, the method is applied to the digitisation of an open book.

In figures 2 to 6, light emission profiles corresponding to different light sources are represented by an equal number of diagrams (2a, 2b, 3a, 3b, 4a, 4b, 4c, 4d, 5a, 5b, 5c, 5d, e 6a, 6b) in which the axis x indicates the position of the scanning area with respect to the object to be digitised during the scanning phase; the axis y indicates the light intensity emitted from the corresponding light source with respect to a given position in the axis x. In Figures 2a to 6b the axes x of the diagrams corresponding to the different light sources, are superimposed and parallel to each other; further the axis x of each diagram is also superimposed and parallel to the object to be digitised so that each point of the object to be digitised have its corresponding value in the axes x of the diagrams and by consequence the axis y shows the light intensity value of the different light sources for each point of the object to be digitised.

In a first embodiment of the method according to the invention, which is exemplified in Figure 2, light variations are obtained in the scanning area during the scanning phase, by switching on and off the two light sources 6a, 6b. In said embodiment the method of the present invention is applied to optimise the lighting on two distinct parts, i.e. two pages of an open book 5 placed in correspondence with the scanning plane 7. More in detail, this embodiment of the method according to the invention consists of the following phases: initially, as in the state of the art, the user places the object to be digitised, in this case the open book 5, in correspondence with the scanning plane 7. In a light setting phase, the user and/or the software determine the light emission profiles that are best suited to the type and characteristics of the original to be scanned. In this embodiment the light emission profiles describe the On or Off state of the corresponding two light sources in relation to different portions of the object to be digitised. In the particular case, the two pages of the open book need a different light emission profile for an higher optimisation. Two light emission profiles are then created according with this need, the first light emission profile corresponding to the left -hand light source 6a is provided essentially from the left-hand light source 6a being On only in correspondence of the left-hand page of the book, and the second light emission profile, corresponding to the right-hand source 6b, is provided essentially from the right-hand light 6b being On only in correspondence of the right-hand page. The switching between the two light emission profiles is done in correspondence of the middle 10 of the book 5, whose position over the scan plane 7 is determined, when creating the light emission profiles, manually by the user and / or by software according to automatic recognition techniques known at the state of the art and / or using, for example, sensors and / or cameras and / or other devices aimed at the object to be digitised. Switching on or off the two light sources, as described in the corresponding light emission profiles, is realised by a light control device 12 during the scanning phase. Afterwards, in an activation phase of the scanning process, the lighting system is actually activated and, therefore, the light bodies that constitute the light sources 6a and 6b are turned on or off according to the desired light configuration, and also scanner elements are moved in order to be positioned in correspondence with the beginning of the scanning plane, in the particular case, over the left-hand page of the book 5. Afterwards, the scanning phase takes place during which the relative movement along the arrow 9 among the image sensor 1, the light sources 6a, 6b and the object to be digitised 5 are realised. According to the invention, during the scan, the light emission profiles determine corresponding changes in the light intensity of the light sources, and particularly at the middle 10 of the book 5, the left-hand light 6a switches off and the right-hand light 6b switches on as exemplified by the diagrams 8a and 8b which describe the light intensity of the corresponding light sources 6a and 6b during the scanning phase and therefore the two diagrams also identify with two light emission profiles corresponding to the two light sources 6a, 6b. In the specific example, the light-on state corresponds to hundred percent of the light intensity while the light off state correspond to zero percent of the light source intensity, and the switching from the on to off state is done instantly without any particular light intensity modulation. On completion of the scanning phase, the closing phase takes place. Thanks to this method, the two pages of the book are digitised into a single image in such a way that the reflections of light caused by the opposite curvatures of the pages in the middle of the book are minimised.

In a second embodiment of the method according to the invention, illustrated in Figure 3, small light variations are obtained in the scanning area during the scanning phase, through independent dimming of the two light sources 6a, 6b. This second embodiment, as compared with the first one, allows a more gradual transition of the light variations over the two pages of the book as shown in the corresponding diagrams 8a and 8b. More specifically, the differences are as follows: during the light setting phase, and relative creation of the light emission profiles, the user or the software also determine the parameters required to describe the light transition; during the scanning phase, the light emission profiles determine corresponding intensity variations in the respective light sources thanks to a light control device 12 capable of gradual modulation of the light intensity. The parameters that describe the light transitions in the light emission profiles can be defined manually by the user and / or by automatic recognition techniques, known to the state of the art, and / or be pre-set. Furthermore, in this embodiment the minimal light intensity, described in the light emission profile, does not correspond to a complete shutdown of the light sources but is set to ten per cent of the nominal light intensity, so that the light intensity variations are more smooth and gradual avoiding unstable and discontinuous light emissions when the light sources are dimmed below a certain intensity threshold which is common in many types of light sources, including LEDs. In this specific example, the two pages of the book are acquired in a manner similar to the first embodiment of the method, but in a way that light transition in the middle of the book is minimised with a result of a mostly uniform digitisation and better image.

In a third embodiment of the method according to the invention, illustrated in Figure 4, small light variations are obtained in the scanning area during the scanning phase, through independent dimming of four light sources 6a, 6b, 6c, 6d. Compared to the previous embodiment, the ability to independently control four light sources instead of just two, allows a gradual change also in the light angle in the curvature of the two pages near the middle 10 of the book 5. In fact, the reflection angle of the light in the curvature of the pages, near the middle 10 of the book 5, is not constant and therefore the ability to vary and adapt moment by moment, during the scan, the angle of the light in accordance with the specific portion of the book which lays in the scan area, allows a mostly uniform image to be obtained. More specifically, this embodiment, as compared to the previous one, is modified as follows: all phases are very similar to those described previously with the exception that during the light setting phase four light emission profiles, corresponding to the respective four light sources 6a, 6b, 6c, 6d, are created in order to realise a change in the intensity and angle of the light between the pages of the book, as evidenced by the corresponding light intensity diagrams 8a, 8b, 8c and 8d. This embodiment provides additional control of the reflections of the light on the object to be digitised, i.e., in this case, in the curvature of the pages of the book.

In a fourth embodiment of the method according to the invention, illustrated in Figure 5, light variations are provided in the scanning area during the scanning phase, through independent dimming of four light sources 6a, 6b, 6c, 6d. This embodiment shows the possibility of creating complex light emission profiles corresponding to complex characteristics of the object to be digitised. This embodiment highlights an important achievement thanks to this invention, namely the fact that the light emission profiles are generated by software and therefore can be generated through the use of complex functions created specifically to optimise light reflections according to different characteristics and types of objects to be digitised, allowing a high capacity of image optimisation to be obtained. This example refers to an hypothetical object to be digitised with complex characteristics and shape, requiring different light intensity and angle variations over different portions of its scanning surface as shown by the corresponding light intensity diagrams 8a, 8b, 8c and 8d.

In a fifth embodiment of the method according to the invention, illustrated in Figure 6, the light emission profiles, generated in the light setting phase, are varied during the scanning phase according to pieces of information provided by the image sensor and/or other types of sensor and/or a camera 11 aimed at the object to be digitised. In this way, for example, by locating said camera 11 so that it precedes image sensors in the scan direction, it is possible to discover in advance important features of the object to be digitised, such as the curvature between the pages in the middle of the book, and so being able to vary the light emission profiles according to these features.

In a sixth embodiment of the method according to the invention, without a reference figure, independent light intensity variations are controlled in light bodies that constitute the light sources, such as individual LED or groups of LEDs. In this manner it is possible to control the light intensity and angle also perpendicularly to the scanning direction. More specifically, this embodiment, as compared with the preceding one, is modified as follows: during the light setting phase different light emission profiles, corresponding to the different light bodies, are also created while during the scanning phase the light bodies intensity is varied according to the respective light emission profile. This additional embodiment of the method provides greater control of the light respect to the previous ones, with even more possibilities of customisation and optimisation of the images.

## Claims

1. A method for digitally scanning images with dynamic light modulation during the scan, suitable for image scanners that are provided with a linear or multi-linear sensor (1), an optical system (2) with its optical axis (3), a device (12) which controls light intensity variations of at least two light sources (6a, 6b) that are constituted of one or more light bodies, including, before or after a phase of positioning an object to be digitised (5), a light setting phase of the at least two light sources (6a, 6b) followed by an activation phase, a scanning phase and a closing phase, **characterised in that**, during the light setting phase, corresponding light emission profiles (8a, 8b) are determined for the at least two light sources (6a, 6b), and during the scanning phase the light intensity of the light sources (6a, 6b) is varied automatically according to said light emission profiles (8a, 8b).

2. The method according to claim 1 **characterised in that** the light emission profiles are determined automatically by software, during the light setting phase.

3. The method according to claim 1 **characterised in that** the light emission profiles determined during the light setting phase are varied, during the scanning phase, according to information provided by a sensor or similar device (11) aimed at the object to be digitised (5).

4. The method according to any of the preceding claims **characterised in that**, during the light setting phase, different light emission profiles are determined for the light bodies which constitute the at least two light sources (6a, 6b) and during the scanning phase light intensity of the light bodies is varied automatically according to said light emission profiles.

5. The method according to any of the preceding claims **characterised in that** the light bodies which constitute the at least two light sources (6a,6b) are LED.
